# EUROPÄISCHE PATENTSCHRIFT

(11) **EP 1 491 784 B1**
(45) Veröffentlichungstag und Bekanntmachung des Hinweises auf die Patenterteilung: **14.06.2006**
(21) Anmeldenummer: 04009777.6
(22) Anmeldetag: 24.04.2004
(51) Int. Cl.: F16D 3/80, F16F 15/16

(54) **Formschlüssige Wellen-Nabeverbindung mit Drehschwingungsentkopplung und Fluiddämpfung**
Positive shaft - hub connection with vibration decoupling and fluid damping
Accouplement positiv d'arbre et de moyeu avec decouplement de vibration et amortissement par fluide

(30) Priorität: 28.06.2003 DE 10329216
(43) Veröffentlichungstag der Anmeldung: 29.12.2004
(73) Patentinhaber: MAN Nutzfahrzeuge Aktiengesellschaft, 80995 München (DE)
(72) Erfinder: Vogel, Claus, 91126 Schwabach (DE)

(56) Entgegenhaltungen:
- DE-B- 1 222 324
- FR-A- 1 536 553
- GB-A- 743 564
- GB-A- 917 521

## Beschreibung

Die Erfindung betrifft eine Vorrichtung, mit der eine Verbindung zwischen einer Welle und einer Nabe hergestellt werden kann. Bekannte derartige Vorrichtungen weisen eine Mehrzahl von ineinander einreifenden Formschlusselementen auf, die einerseits durch von der Welle radial nach außen abstehende, mit dieser drehfest verbundene erste Vorsprünge und andererseits durch von der Nabe nach innen abstehende, mit dieser drehfest verbundene zweite Vorsprünge gebildet werden. Derartige Vorrichtungen greifen im Stand der Technik so ineinander ein, dass ein Spiel im Sinne eines geringen Drehversatzes zwischen Welle und Nabe nicht möglich ist. Andere Vorrichtrungen nach dem Stand der Technik sind so konstruiert, dass ganz bewusst ein einen Drehversatz zwischen Welle und Nabe zulassendes Spiel ermöglicht wird.

Aus der FR-A-1 536 553 ist es darüber hinaus bekannt, zur Herstellung einer Welle-Nabe-Verbindung, eine Mehrzahl von ineinander eingreifenden Formschlusselementen vorzusehen, die einerseits durch von der Welle radial nach außen abstehende, mit dieser drehfest verbundene erste Vorsprünge und andererseits durch von der Nabe nach innen abstehende, mit dieser drehfest verbundene zweite Vorsprunge gebildet werden. Dabei sind zwischen den benachbart angeordneten ersten Vorsprüngen und den zweiten Vorsprüngen Freiräume gebildet, in denen ein lastwechselabhängiges Fluidvolumen eingeschlossen ist. Die Welle ist mit zwischen den ersten Vorsprüngen angeordneten konvexzylindrischen ersten Führungsflächen versehen ist, die von konkaven ersten Gegenführungsflächen beaufschlagt werden, die an den nach innen weisenden Enden der Vorsprünge angeordnet sind. Die Nabe weist zwischen den zweiten Vorsprüngen angeordnete konkavzylindrische zweite Führungsflächen auf, die von konvexen zweiten Gegenführungsflächen beaufschlagt werden, die sich an den nach außen weisenden Enden der ersten Vorsprünge befinden. Zur Fluidversorgung sind die Freiräume über die Welle radial durchsetzende Fluidkanäle mit einem Fluiddruck-Kanal verbunden der entlang der Mittel-Längsachse der Welle verläuft.

Die GB 917 521 A zeigt weiter, bei einer Anordnung ähnlich der vorhergehend beschriebenen, in den Zwischenräumen an Stelle des Fluides elastische Bälge die mit einem Fluid gefüllt sind. Die Bälge sind dabei so untereinander verbunden, dass bei auftretenden Drehmomentstößen ein dämpfendes Überströmen des Fluides zwischen den Bälgen erfolgt.

Weiter ist aus der GB 743 564 A eine Welle-Nabeverbindung bekannt die sich ebenfalls der vorstehend beschriebenen Prinzipien bedient, hier ist jedoch die Anordnung fluiddicht gekapselt und ohne eine Fluidzuführung ausgeführt. Zum Abfangen von Drehmomentstößen sind zusätzlich in den Zwischenräumen elastisch verformbare Elemente angeordnet.

Die DE 12 22 324 B zeigt schließlich eine Kupplungsanordnung, bei der die Welle-Nabeverbindung mittels sich radial erstreckender Federelementen hergestellt ist, wobei die Federelemente so in fluidgefüllten Kammern angeordnet sind, dass sie diese jeweils in zwei Teilräume teilen, wobei das darin eingeschlossene Fluidvolumen bei Drehmomentstößen dämpfend wirkt.

Der Erfindung liegt die Aufgabe zugrunde, eine formschlüssige Welle-Nabe-Verbindung sicherstellende Vorrichtung derart auszubilden, dass an der Welle oder an der Nabe auftretende Drehschwingungen beim Übergang zur Nabe bzw. zur Welle entkoppelt und gedämpft werden. Diese Aufgabe wird durch die kennzeichnenden Merkmale des Anspruches 1 gelöst. Vorteilhafte Weiterbildungen der Erfindung ergeben sich aus den Unteransprüchen.

Zur Lösung der Aufgabe geht die Erfindung von einer Anordnung aus, bei der zwischen benachbart angeordneten ersten und zweiten Vorsprüngen der Vorrichtung Freiräume gebildet sind, in denen ein lastwechselabhängiges Fluidvolumen eingeschlossen ist. Wenn in diesem Zusammenhang von lastwechselabhängig gesprochen wird, so bedeutet dies, dass je nach Drehbelastung der Vorrichtung die zwischen den Vorsprüngen eingeschlossenen Fluidvolumina variieren können, d.h. sich vergrößern oder verkleinern können. Dazu ist vorgesehen, dass entweder zwischen den gebildeten Freiräumen oder über ein sonstiges mit den Freiräumen zusammenwirkendes Leitungssystem Fluidanteile aus den Freiräumen abfließen oder in diese einfließen können. Dies geschieht je nach Belastung des/der Fluidvolumen infolge einer Drehbelastung der Vorrichtung.

Um ein axiales Fluchten der gegenseitigen Teile sicherzustellen, ist die Welle mit zwischen den ersten Vorsprüngen angeordneten konvexzylindrischen Führungsflächen versehen, die von konkaven ersten Gegenführungsflächen beaufschlagt werden, die an den nach innen weisenden Enden der zweiten Vorsprünge angeordnet sind. Die Nabe weist zwischen den zweiten Vorsprüngen angeordnete konkavzylindrische zweite Führungsflächen auf, die von konvexen zweiten Gegenführungsflächen beaufschlagt werden, die an den nach außen weisenden Enden der ersten Vorsprüngen angeordnet sind.

Als Kern der Erfindung wird die vereinfachte Herstellung gesehen, wenn die Seitenflanken der ersten Vorsprünge etwa parallel zueinander angeordnet sind und die Seitenflanken der zweiten Vorsprünge etwa rechtwinklig zueinander stehen, wobei geringfügige Abweichungen der Parallelität der Seitenflanken der ersten Vorsprünge bzw. der Rechtwinkligkeit der Seitenflanken der zweiten Vorsprünge infolge des beabsichtigten gedämpften Drehversatzes der Welle und der Nabe zweckmäßig sein können.

An der Welle können vier erste Vorsprünge sich paarweise gegenüberliegend angeordnet sein. Die radiale Abstehlänge aller Vorsprünge ist dabei gleich. Bezogen auf die Mittellängsachse der Welle kann der Radius der konvexzylindrischen ersten Führungsflächen etwa halb so groß gewählt sein wie der Radius der konvexzylindrischen zweiten Führungsflächen an den äußeren Enden der ersten Vorsprünge.

Um die angestrebte Dämpfung zu optimieren, können jeweils mindestens zwei Freiräume durch mindestens einen Überströmkanal miteinander verbunden sein. Wobei der mindestens eine Überströmkanal die ersten Vorsprünge vorzugsweise rechtwinklig zu dessen Seitenflanken durchsetzt. Die Freiräume können über Fluidkanäle mit einem Fluiddruckkanal verbunden sein, der entlang der Mittellängsachse verlaufen kann. In den Fluidkanälen können Rückschlagventile angeordnet werden, um ein Zurückfließen des Fluids bei auftretendem Lastwechsel in den Fluiddruckkanal zu vermeiden.

Zusätzlich oder alternativ kann vorgesehen sein, daß die Dichtungsbereiche zwischen Welle und Nabe derart bemessen sind, daß ein gezielter Austritt von unter Druck stehendem Fluid ermöglicht wird. Um dieses Fluid aufzufangen, ist die Vorrichtung in einem Gehäuse angeordnet oder über einem Sammelelement, in welchem aus der Vorrichtung austretendes Fluid aufgesammelt wird.

Die Breite der Freiräume kann derart bemessen sein, daß zwischen der Welle und der Nabe relative Drehbewegungen von etwa 5 - 15 ° ermöglicht sind. Die maximale Breite eines jeden Freiraumes kann etwa 25 - 50 % der Breite eines ersten Vorsprunges besagen.

Die Erfindung ist anhand eines Ausführungsbeispieles in den Zeichnungsfiguren näher erläutert. Diese zeigen:

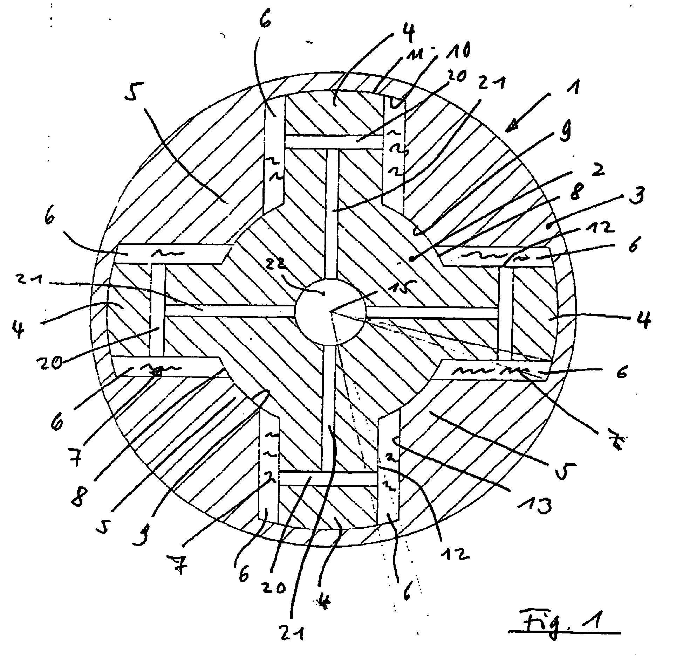

- Fig. 1: eine Vorrichtung nach der Erfindung, wobei die ersten Vorsprünge bezogen auf die zweiten Vorsprünge in einer Mittelstellung sind

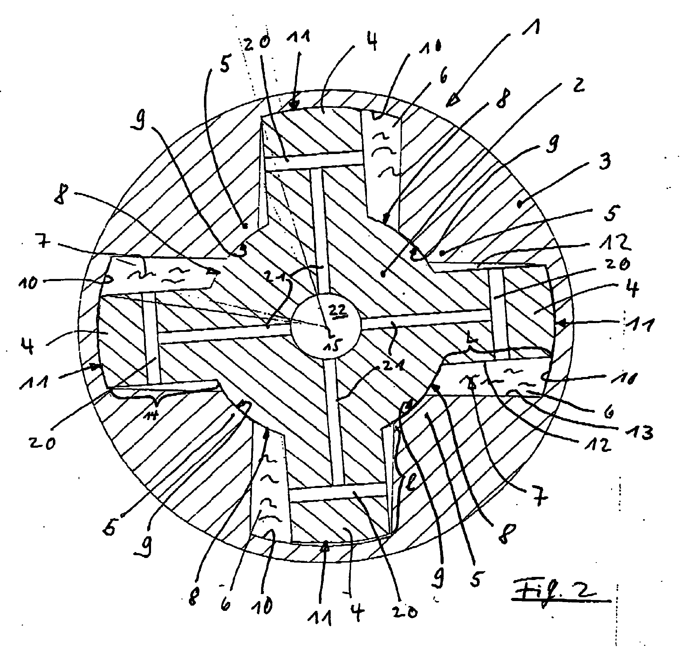

- Fig. 2: eine Vorrichtung, bei der die ersten Vorsprünge verdreht zwischen den zweiten Vorsprüngen liegen, so daß in den Freiräume unterschiedliche Fluidvolumina eingeschlossen sind

Die insgesamt mit Bezugszeichen 1 bezeichnete Vorrichtung dient zur Herstellung einer Verbindung zwischen einer Welle und einer Nabe 3 und weist eine Mehrzahl von ineinander eingreifenden Formschlusselemente auf, die einerseits durch von der Welle 2 radial nach außen abstehende, mit dieser drehfest verbundene erste Vorsprünge 4 und andererseits durch von der Nabe 3 nach innen abstehende, mit dieser drehfest verbundene zweite Vorsprünge 5 gebildet werden. Zwischen benachbart angeordneten ersten Vorsprüngen 4 und zweiten Vorsprüngen 5 sind Freiräume 6 gebildet. In denen ein Fluid 7 eingeschlossen ist, das abhängig von der Belastung zwischen Welle und Nabe sein Volumen ändern kann.

Zur gegenseitigen Führung zwischen Welle und Nabe ist die Welle 2 mit zwischen den ersten Vorsprüngen 4 angeordneten, konvexzylindrischen ersten Führungsflächen 8 versehen, die von konkaven ersten Gegenführungsflächen 9 beaufschlagt werden, die an den nach innen weisenden Enden der zweiten Vorsprünge 5 angeordnet sind. Die Nabe 3 ihrerseits ist mit zwischen den zweiten Vorsprüngen 5 angeordneten konkavzylindrischen zweiten Führungsflächen 10 versehen, die von konvexen zweiten Gegenführungsflächen 11 beaufschlagt werden, die an den nach außen weisenden Enden der ersten Vorsprüngen 4 angeordnet sind.

Die Seitenflanken 12 der ersten Vorsprünge 4 liegen etwa parallel zueinander, die Seitenflanken 13 der zweiten Vorsprünge 5 schließen zueinander einen rechten Winkel ein.

Die Parallelität der Seitenflanken 12 bezieht sich dabei auf die Seitenflanken eines ersten Vorsprunges. Die zueinander rechtwinklige Anordnung der Seitenflanken 13 bezieht sich dabei auf die Seitenflanken eines zweiten Vorsprunges 5.

Die radiale Länge 14 der Freiräume 6 entspricht im wesentlichen der radialen Abstehlänge der ersten Vorsprünge 4. Die ersten Vorsprunge 4 liegen sich radial von der Welle 2 abstehend gegenüber. Insgesamt sind vier erste Vorsprünge 4 angeordnet, deren radiale Abstehlänge L gleich ist. Auch die radiale Abstehlänge 1 aller zweiten Vorsprünge 5 ist gleich.

Der Radius der konvexzylindrischen ersten Führungsflächen 8 ist bezogen auf die Mittellängsachse 15 der Welle 2 etwa halb so groß wie der Radius der konvexzylindrischen zweiten Gegenführungsfläche 11 an den äußeren Enden der ersten Vorsprünge 4.

Je zwei einen ersten Vorsprung 4 seitlich flankierende Freiräume sind durch einen Überströmkanal 20 miteinander verbunden, wobei die Überströmkanäle in den ersten Vorsprüngen 4 angeordnet sind und diese rechtwinklig zu ihren Seitenflanken 12 durchsetzen. Darüber hinaus sind die Freiräume 6 über Fluidkanäle 21 mit einem Fluid-Druckkanal 22 verbunden, der entlang der Mittellängsachse 15 der Welle 2 verläuft. Die mit dem Fluid-Druckkanal 22 verbundenen Fluidkanäle 21 münden mittig in die Überströmkanäle 20. In den Fluidkanälen können Rückschlagventile angeordnet sein, die in den Zeichnungsfiguren nicht dargestellt sind. Der Fluid-Druckkanal 22 kann mit einem druckerzeugenden Aggregat einer Maschine, insbesondere eines Motors, verbunden sein. Es ist alternativ aber auch möglich, den Fluid-Druckkanal 22 mit einem gesonderten fluiddruckerzeugenden Aggregat zu verbinden.

Die Dichtbereiche zwischen der Welle 2 und Nabe 3 können derart bemessen bzw. ausgeführt sein, daß ein gezielter Austritt von unter Druck stehenden Fluid 7 aus der gesamten Vorrichtung 1 ermöglicht ist. Um dieses Fluid aufzufangen ist die Vorrichtung 1 in einem Gehäuse oder einem Sammelelement angeordnet. Die Breite der Freiräume 6 ist derart bemessen, daß zwischen der Welle 2 und Nabe 3 relative Drehbewegungen von etwa 5 - 15 ° ermöglicht sind. Die maximale Breite eines jeden Freiraumes 6 beträgt etwa 25 - 50 % der Breite eines ersten Vorsprunges 4.

### Bezugszeichenliste

- 1: Vorrichtung
- 2: Welle
- 3: Nabe
- 4: Erste Vorsprünge
- 5: Zweite Vorsprünge
- 6: Freiräume
- 7: Fluid
- 8: Erste Führungsfläche
- 9: Erste Gegenflächen
- 10: Zweite Führungsfläche
- 11: Zweite Gegenflächen
- 12: Seitenflanken v. 4
- 13: Seitenflanken v. 5
- 14: Radiale Länge
- 15: Mittel-Längs-Achse
- 20: Überströmkanal
- 21: Fluidkanal
- 22: Fluid-Druckkanal

## Patentansprüche

1. Vorrichtung (1) zur Herstellung einer Welle-Nabe-Verbindung, mit einer Mehrzahl von ineinander eingreifenden Formschlusselementen, die einerseits durch von der Welle (2) radial nach außen abstehende, mit dieser drehfest verbundene erste Vorsprünge (4) und andererseits durch von der Nabe (3) nach innen abstehende, mit dieser drehfest verbundene zweite Vorsprunge (5) gebildet werden, wobei
- zwischen benachbart angeordneten ersten Vorsprüngen (4) und zweiten Vorsprüngen (5) Freiräume (6) gebildet sind, in denen ein lastwechselabhängiges Fluidvolumen eingeschlossen ist,
- die Welle (2) mit zwischen den ersten Vorsprüngen (4) angeordneten konvexzylindrischen ersten Führungsflächen (8) versehen ist, die von konkaven ersten Gegenführungsflächen (9) beaufschlagt werden, die an den nach innen weisenden Enden der zweiter Vorsprünge (5) angeordnet sind,
- die Nabe (3) mit zwischen den zweiten Vorsprüngen (5) angeordneten konkavzylindrischen zweiten Führungsflächen (10) versehen ist, die von konvexen zweiten Gegenführungsflächen (11) beaufschlagt werden, die an den nach außen weisenden Enden der ersten Vorsprünge (4) angeordnet sind,
- die Freiräume (6) über Fluidkanäle (21) mit einem Fluiddruck-Kanal (22) verbunden sind,
- der Fluiddruck-Kanal (22) entlang der Mittel-Längsachse (15) der Welle (2) verläuft,
**dadurch gekennzeichnet, dass**
- die Seitenflanken (12) der ersten Vorsprünge (4) etwa parallel zueinander angeordnet sind,
- die Seitenflanken (13) der zweiten Vorsprünge (5) etwa rechtwinklig zueinander stehend angeordnet sind.

2. Vorrichtung nach einem der vorhergehenden Ansprüche, **dadurch gekennzeichnet, dass** die Freiräume (6) zwischen den sich gegenüberliegenden Seitenflanken (12, 13) der ersten (4) und der zweiten Vorsprünge (5) angeordnet sind.

3. Vorrichtung nach einem der vorhergehenden Ansprüche, **dadurch gekennzeichnet, dass** die radiale Länge (14) der Freiräume (6) im wesentlichen der radialen Abstehlänge L der ersten Vorsprünge (4) entspricht.

4. Vorrichtung nach einem vorhergehenden Ansprüche, **dadurch gekennzeichnet, dass** sich erste Vorsprunge (4) radial von der Welle (2) abstehend gegenüberliegen.

5. Vorrichtung nach einem der vorhergehenden Ansprüche, **dadurch gekennzeichnet, dass** an der Welle (2) vier erste Vorsprünge (4) angeordnet und/oder mit dieser drehfest verbunden sind.

6. Vorrichtung nach einem der vorhergehenden Ansprüche, **dadurch gekennzeichnet, dass** die radiale Abstehlänge L aller ersten Vorsprünge (4) gleich ist.

7. Vorrichtung nach einem der vorhergehenden Ansprüche, **dadurch gekennzeichnet, dass** die radiale Abstehlänge 1 aller zweiten Vorsprünge (5) gleich ist.

8. Vorrichtung nach einem der vorhergehenden Ansprüche, **dadurch gekennzeichnet, dass** bezogen auf die Mittel-Längs-Achse (15) der Welle (4) der Radius der konvexzylindrischen ersten Führungsflächen (8) etwa halb so groß ist wie der Radius der konvexzylindrischen zweiten Gegenführungsflächen (11) an den äußeren Enden der ersten Vorsprünge (4).

9. Vorrichtung nach einem der vorhergehenden Ansprüche, **dadurch gekennzeichnet, dass** jeweils mindestens zwei Freiräume (6) durch mindestens einen Überströmkanal (20) miteinander verbunden sind.

10. Vorrichtung nach einem der vorhergehenden Ansprüche, **dadurch gekennzeichnet, dass** jeweils zwei neben den Seitenflanken eines ersten Vorsprunges angeordnete Freiräume (6) über mindestens einem Überströmkanal (20) miteinander verbunden sind.

11. Vorrichtung nach einem der vorhergehenden Ansprüche, **dadurch gekennzeichnet, dass** die die Freiräume (6) verbindenden Überströmkanäle (20) in den ersten Vorsprüngen angeordnet sind.

12. Vorrichtung nach Anspruch 11, **dadurch gekennzeichnet, dass** die Überströmkanäle (20) die ersten Vorsprünge (4) rechtwinklig zu deren Seitenflanken (12) durchsetzen.

13. Vorrichtung nach einem der vorhergehenden Ansprüche, **dadurch gekennzeichnet, dass** vom Fluiddruck-Kanal (22) Fluidkanäle (21) in die Überströmkanäle (20) münden.

14. Vorrichtung nach einem der vorhergehenden Ansprüche, **dadurch gekennzeichnet, dass** in den Fluidkanälen (21) Rückschlagventile angeordnet sind.

15. Vorrichtung nach einem der vorhergehenden Ansprüche, **dadurch gekennzeichnet, dass** der Fluiddruck-Kanal (22) mit einem fluiddruckerzeugenden Aggregat einer Maschine, insbesondere eines Motors, verbunden ist.

16. Vorrichtung nach einem der vorhergehenden Ansprüche, **dadurch gekennzeichnet, dass** der Fluiddruck-Kanal (22) mit einem gesonderten fluiddruckerzeugenden Aggregat verbinden ist.

17. Vorrichtung nach einem der vorhergehenden Ansprüche, **dadurch gekennzeichnet, dass** die Dichtungsbereiche zwischen Welle (2) und Nabe (3) derart bemessen sind, dass ein gezielter Austritt von unter Druck stehendem Fluid (7) ermöglicht ist.

18. Vorrichtung nach einem der vorhergehenden Ansprüche, **dadurch gekennzeichnet, dass** die Vorrichtung (1) in einem Gehäuse oder über einem Element angeordnet ist, in welchem aus der Vorrichtung austretendes Fluid (7) gesammelt wird.

19. Vorrichtung nach einem der vorhergehenden Ansprüche, **dadurch gekennzeichnet, dass** die Breite der Freiräume (6) derart bemessen ist, dass zwischen der Welle (2) und der Nabe (3) relative Drehbewegungen von etwa 5 - 15 ° ermöglicht sind.

20. Vorrichtung nach einem der vorhergehenden Ansprüche, **dadurch gekennzeichnet, dass** die maximale Breite eines jeden Freiraumes (6) etwa 25 - 50 % der Breite eines ersten Vorsprunges (4) beträgt.

## Claims

1. Device (1) for manufacturing a shaft-hub connection, with a large number of intermeshing positive elements formed on the one hand by first projections (4) radially pointing outwards away from the shaft (2) and rigidly connected with said shaft (2) and, on the other, by second projections (5) radially pointing inwards away from the hub (3) and rigidly connected with said hub (3), whereby
• clear spaces are provided between the adjacently arranged first projections (4) and second projections (5), in which clear spaces a load-cycle-dependent fluid volume is enclosed,
• the shaft (2) is provided with convex-cylindrical first guide faces (8) arranged between the first projections (4) and charged by concave first counter guide faces (9) arranged on the inward-pointing ends of the second projections (5),
• the hub (3) is provided with concave-cylindrical second guide faces (10) arranged between the second projections (5) and charged by convex second counter guide faces (11) arranged on the outward-pointing ends of the first projections (4),
• the clear spaces (6) are connected with a pressurised fluid duct (22) via fluid ducts (21)
• the pressurised fluid duct (22) extends along the centre longitudinal axis (15) of the shaft (2),
**characterised in that**
• the lateral flanks (12) of the second projections (4) are in approximately parallel arrangement relative to one another
• the lateral flanks (13) of the second projections (5) are arranged approximately at right angles relative to one another.

2. Device according to Claim 1, **characterised in that** the clear spaces (6) are arranged between the lateral flanks (12, 13) of the first (4) and second projections (5), said flanks (12, 13) facing one another.

3. Device according to one of the foregoing Claims, **characterised in that** the radial length (14) of the clear spaces (6) basically corresponds to the radial projection length L of the first projections (4).

4. Device according to one of the foregoing Claims, **characterised in that** the first projections (4) radially project from the shaft (2) and are opposite to one another.

5. Device according to one of the foregoing Claims, **characterised in that** four first projections (4) are arranged on and/or rigidly connected with the shaft (2).

6. Device according to one of the foregoing Claims, **characterised in that** the radial projection length L of all first projections (4) is identical.

7. Device according to one of the foregoing Claims, **characterised in that** the radial projection length I of all second projections (5) is identical.

8. Device according to one of the foregoing Claims, **characterised in that** in relation to the centre longitudinal axis (15) of the shaft (4) the radius of the convex-cylindrical first guide faces (8) is approximately half as large as the radius of the convex-cylindrical second counter guide faces (11) on the outer ends of the first projections (4).

9. Device according to one of the foregoing Claims, **characterised in that** at least two clear spaces (6) are connected with one another by at least one overflow duct (20).

10. Device according to one of the foregoing Claims, **characterised in that** pairs of clear spaces (6) are arranged next to the lateral flanks of a first projection (4) and are connected with one other by means of at least one overflow duct (20).

11. Device according to one of the foregoing Claims, **characterised in that** overflow ducts (20) connecting the clear spaces (6) are arranged in the first projections (4).

12. Device according to Claim 11, **characterised in that** the overflow ducts (20) pass through the first projections (4) at right angles relative to their lateral flanks (12).

13. Device according to one of the foregoing Claims, **characterised in that** fluid ducts (21) connected with the pressurised fluid duct (22) discharge into the overflow ducts (20).

14. Device according to one of the foregoing Claims, **characterised in that** check valves are arranged in the fluid ducts (21).

15. Device according to one of the foregoing Claims, **characterised in that** the pressurised fluid duct (22) is connected with a pressure-generating unit of a machine, particularly an engine.

16. Device according to one of the foregoing Claims, **characterised in that** the pressurised fluid duct (22) is connected with a separate fluid-pressure-generating unit.

17. Device according to one of the foregoing Claims, **characterised in that** the sealing areas between the shaft (2) and hub (3) are dimensioned and designed such that deliberate emergence of pressurised fluid (7) is possible.

18. Device according to one of the foregoing Claims, **characterised in that** the device (1) is arranged in a housing or above a collector element in which fluid (7) emerging from the device is caught.

19. Device according to one of the foregoing Claims, **characterised in that** the width of the clear spaces (6) is dimensioned such that relative rotary motion of approximately 5 - 15° is possible between between the shaft (2) and hub (3).

20. Device according to one of the foregoing Claims, **characterised in that** the maximum width of each and every clear space (6) is approximately 25 - 50 % of the width of a first projection (4).

## Revendications

1. Dispositif (1) pour réaliser une liaison arbre-moyeu, comprenant une pluralité d'éléments de crabotage s'engrenant les uns dans les autres et formés d'une part par des premières saillies (4) dépassant de l'arbre (2) radialement vers l'extérieur en étant solidaires en rotation avec celui-ci, et d'autre part par des deuxièmes saillies (5) dépassant du moyeu (3) vers l'intérieur et solidaires en rotation avec celui-ci, dans lequel
- entre des premières saillies (4) et des deuxièmes saillies (5) voisines des espaces libres (6) renferment un volume de fluide (7) variable en fonction de l'alternance d'effort,
- entre les premières saillies (4), l'arbre (2) comporte des premières surfaces de guidage (8) cylindriques convexes sollicitées par des premières surfaces de guidage antagonistes (9) concaves disposées au niveau des extrémités des deuxièmes saillies (5) dirigées vers l'intérieur,
- le moyeu (3) présente entre les deuxièmes saillies (5), des deuxièmes surfaces de guidage (10) cylindriques concaves, sollicitées par des deuxièmes surfaces de guidage (11) antagonistes convexes disposées au niveau des extrémités des premières saillies (4) dirigées vers l'extérieur,
- les espaces libres (6) sont reliés par des canaux de fluide (21) à un canal de pression de fluide (22), et
- le canal de pression de fluide (22) s'étend le long de l'axe longitudinal médian (15) de l'arbre (2),
**caractérisé en ce que**
- les flancs latéraux (12) des premières saillies (4) sont sensiblement parallèles les uns aux autres, et
- les flancs latéraux (13) des deuxièmes saillies (5) sont à angle droit les uns des autres.

2. Dispositif selon l'une quelconque des revendications précédentes,
**caractérisé en ce que**
les espaces libres (6) sont disposés entre les flancs latéraux (12, 13) tournés les uns vers les autres des premières (4) et des deuxièmes saillies (5).

3. Dispositif selon l'une quelconque des revendications précédentes,
**caractérisé en ce que**
la longueur radiale (14) des espaces libres (6) correspond essentiellement à la longueur de dépassement L des premières saillies (4).

4. Dispositif selon l'une quelconque dcs revendications précédentes,
**caractérisé en ce que**
des premières saillies (4) sont tournées les unes vers les autres en dépassant radialement de l'arbre (2).

5. Dispositif selon l'une quelconque des revendications précédentes,
**caractérisé en ce que**
quatre premières saillies (4) sont montées sur l'arbre (4) et/ou solidaires en rotation avec celui-ci.

6. Dispositif selon l'une quelconque des revendications précédentes,
**caractérisé en ce que**
la longueur de dépassement radiale (L) de toutes les premières saillies (4) est identique.

7. Dispositif selon l'une quelconque des revendications précédentes,
**caractérisé en ce que**
la longueur de dépassement radiale (1) de toutes les deuxièmes saillies (5) est identique.

8. Dispositif selon l'une quelconque des revendications précédentes,
**caractérisé en ce que**
par rapport à l'axe longitudinal médian (15) de l'arbre (2) le rayon des premières surfaces de guidage (8) cylindriques convexes est sensiblement la moitié du rayon des deuxièmes surfaces de guidage antagonistes (11) cylindriques convexes situées aux extrémités terminales des premières saillies (4).

9. Dispositif selon l'une quelconque des revendications précédentes,
**caractérisé en ce qu'**
au moins deux espaces libres (6) sont chaque fois reliés l'un à l'autre par au moins un canal de débordement (20).

10. Dispositif selon l'une quelconque des revendications précédentes,
**caractérisé en ce que**
deux espaces libres (6) disposés à côté des flancs latéraux d'une première saillie sont chaque fois reliés l'un à l'autre par au moins un canal de débordement (20).

11. Dispositif selon l'une quelconque des revendications précédentes,
**caractérisé en ce que**
les canaux de débordement (20) reliant les espaces libres (6) sont disposés dans les premières saillies.

12. Dispositif selon l'une quelconque des revendications précédentes,
**caractérisé en ce que**
les canaux de débordement (20) traversent les premières saillies (4) à angle droit de leurs flancs latéraux (12).

13. Dispositif selon l'une quelconque des revendications précédentes,
**caractérisé en ce que**
depuis le canal de pression de fluide (22) des canaux de fluide (21) débouchent dans les canaux de débordement (20).

14. Dispositif selon l'une quelconque des revendications précédentes,
**caractérisé en ce que**
des clapets anti-retour sont disposés dans les canaux de fluide (21).

15. Dispositif selon l'une quelconque des revendications précédentes,
**caractérisé en ce que**
le canal de pression de fluide (22) est relié à un groupe générateur de pression de fluide d'une machine, en particulier d'un moteur.

16. Dispositif selon l'une quelconque des revendications précédentes,
**caractérisé en ce que**
le canal de pression de fluide (22) est relié à un groupe générateur de pression de fluide distinct.

17. Dispositif selon l'une quelconque des revendications précédentes,
**caractérisé en ce que**
les zones d'étanchéité entre l'arbre (2) et le moyeu (3) sont dimensionnées ou réalisées pour permettre une sortie ponctuelle de fluide (7) sous pression.

18. Dispositif selon l'une quelconque des revendications précédentes,
**caractérisé en ce que**
le dispositif (1) est disposé dans un boîtier ou au-dessus d'un élément collecteur qui recueille du fluide (7) sortant du dispositif.

19. Dispositif selon l'une quelconque des revendications précédentes,
**caractérisé en ce que**
la largeur des espaces libres (6) est dimensionnée pour permettre des mouvements de rotation relatifs de 5 - 15° environ entre l'arbre (2) et le moyeu (3).

20. Dispositif selon l'une quelconque des revendications précédentes,
**caractérisé en ce que**
la largeur maximale de chaque espace libre (6) correspond sensiblement à 25 - 50 % de la largeur d'une première saillie (4).
